# EUROPÄISCHE PATENTSCHRIFT

(11) **EP 3 634 300 B1**
(45) Veröffentlichungstag und Bekanntmachung des Hinweises auf die Patenterteilung: **25.08.2021**
(21) Anmeldenummer: 18742718.2
(22) Anmeldetag: 03.07.2018
(51) Int. Cl.: A61C 13/00, A61C 13/01

(54) **VERFAHREN ZUR HERSTELLUNG EINER KÜNSTLICHEN GINGIVA**
METHOD FOR PRODUCING AN ARTIFICIAL GINGIVA
PROCÉDÉ DE FABRICATION D'UNE GENCIVE ARTIFICIELLE

(30) Priorität: 03.07.2017 DE 102017211249
(43) Veröffentlichungstag der Anmeldung: 15.04.2020
(73) Patentinhaber: Sirona Dental Systems GmbH, 64625 Bensheim (DE)
(72) Erfinder: SENN, Marc, 8200 Schaffhausen (CH); OSKAM, Thomas, 8200 Schaffhausen (CH)
(74) Vertreter: Özer, Alpdeniz
(86) Internationale Anmeldenummer: PCT/EP2018/067983
(87) Internationale Veröffentlichungsnummer: WO 2019/007976

(56) Entgegenhaltungen:
- EP-A1- 2 499 990
- EP-A1- 3 064 170
- EP-A2- 2 389 891
- DE-A1-102006 026 776
- DE-A1-102007 025 164
- DE-B3-102014 118 231

## Beschreibung

### Technisches Gebiet

Die Erfindung betrifft ein Verfahren zur Herstellung einer künstlichen Gingiva, wobei ein 3D-Modell der künstlichen Gingiva bereits vorhanden ist.

### Stand der Technik

Aus dem Stand der Technik sind bereits Verfahren bekannt, um eine künstliche Gingiva herzustellen.

DE 10 2014 215 103 B4 offenbart ein Verfahren zur virtuellen Nachbearbeitung einer virtuellen künstlichen Gingiva, wobei das virtuelle 3D-Modell der künstlichen Gingiva mittels eines virtuellen Werkzeugs gezielt bearbeitet wird.

EP 3 087 948 A1 offenbart ein Verfahren zur Konstruktion einer Dentalprothese bestehend aus einer künstlichen Gingiva und künstlichen Zähnen, wobei die künstliche Gingiva konstruiert wird und mittels eines CAD/CAM-Systems hergestellt wird. In die künstliche Gingiva werden dann Zähne eingesetzt.

EP 2 322 115 A1 offenbart ein Verfahren zur Konstruktion einer Dentalprothese bestehend aus einer künstlichen Gingiva und künstlichen Zähnen, wobei ein 3D-Modell der künstlichen Gingiva an die benachbarten Strukturen, wie den Kieferknochen und die Zähne, angepasst wird.

WO 2013/120955 A1 offenbart ein Verfahren zur Konstruktion einer Dentalprothese bestehend aus künstlicher Gingiva und künstlichen Zähnen, wobei die virtuellen künstlichen Zähne relativ zum virtuellen Modell der Gingiva angeordnet werden .

DE 102014118231 B3 offenbart ein Verfahren zur Herstellung einer Dentalprothese, wobei die Dentalprothese eine Prothesenbasis und mehrere Prothesenzähne aufweist, wobei eine Schablone zum Einsetzen der Prothesenzähne eine negative Fläche zu den Okklusalflächen der Prothesenzähne aufweist.

DE 102007025164 A1 offenbart ein Verfahren und eine Vorrichtung zum Erstellen eines Modells eines Patientengebisses, wobei eine Zahnfleischmaske aus Silikon in einer Negativform der Masse hergestellt wird.

EP 3064170 A1 offenbart eine dentale Prothese, hergestellt aus einem ein- oder mehrteiligen Prothesenrohling, der aus einem fleischfarbenen Material aufgebaut ist, wobei das zahnfarbene Material eine Größe aufweist, die größer als ein menschlicher Zahnbogen ist, wobei das fleischfarbene und ein zahnfarbene Material intensiv miteinander verbunden sind, wobei die Grenzfläche zwischen den Materialien - im Zahnbogenverlauf betrachtet wellenförmig und in vestibulärer Richtung betrachtet strahlenförmig ausgebildet ist.

EP 2389891 A2 offenbart ein Analogimplantat für ein Dentalmodell, das eine Geometrie aufweist, die eine Blindbohrung eines Dentalmodells gestatten, wobei das Analogimplantat einen distalen Abschnitt und einen proximalen Abschnitt aufweist, wobei der proximale Abschnitt eine drehsymmetrische Geometrie in einem Querschnitt aufweist, der senkrecht zur Achse des proximalen Abschnitts liegt, wobei die drehsymmetrische Geometrie ausgebildet ist, um die Rotationssicherung und Repositionierung des Analogimplantats in einer Bohrung oder Blindbohrung eines Dentalmodells zu gestatten, wobei ein proximal gelegener Absatz des distalen Abschnitts einen Höhenanschlag bildet, der eine genaue Positionierung des Analogimplantats an einem Weichgewebe des Dentalmodells gestattet.

EP 2499990 A1 offenbart ein Dentalmodell als Arbeits- und Kontrollmodell zur Anfertigung von Zahnersatz, bestehend aus einem Basismodell mit einem Grundkörper und darauf geformter Modellgingiva und Modellzähnen, wobei eine Aussparung vorgesehen ist, in die lösbar eine Gingiva-Maske eingesetzt wird.

DE 10 2006 026 776 A1 offenbart ein Verfahren zur Herstellung einer Zahnprothese.

Ein Nachteil der bekannten Verfahren besteht darin, dass die künstliche Gingiva beispielsweise mittels eines CAD/CAM-Systems oder manuell durch einen Zahntechniker hergestellt wird. Die künstliche Gingiva besteht aus einem flexiblen Material, das natürliches Zahnfleisch simulieren soll. Daher kann es zu Herstellungsfehlern kommen, so dass die hergestellte künstliche Gingiva von dem konstruierten 3D-Modell der künstlichen Gingiva abweicht.

Die Aufgabe der vorliegenden Erfindung besteht daher darin, eine künstliche Gingiva auf eine einfache Art und Weise mit einem hohen Automatisierungsgrad präzise herzustellen.

### Darstellung der Erfindung

Die Aufgabe der vorliegenden Erfindung wird durch das Verfahren zur Herstellung einer künstlichen Gingiva gemäß Anspruch 1 gelöst. Die weiteren Ansprüche beschreiben vorteilhafte Ausführungformen.

Die Erfindung betrifft ein Verfahren zur Herstellung einer künstlichen Gingiva, wobei ein 3D-Modell der künstlichen Gingiva bereits vorhanden ist. Anhand des 3D-Modells der künstlichen Gingiva wird dabei eine Gingivaschablone konstruiert, die zumindest Teilbereiche des 3D-Modells der künstlichen Gingiva als Negativform abbildet.

Die künstliche Gingiva kann aus einem weichen elastischen Material, wie Silikon, bestehen, wobei die Eigenschaften von natürlichem Zahnfleisch nachgeahmt werden sollen. Dabei kann die künstliche Gingiva beispielsweise rosa eingefärbt sein, um die natürliche Farbe einer natürlichen Gingiva nachzuahmen. Die Eine künstliche Gingiva kann in ein Dentalmodell einer Zahnsituation eingesetzt werden, um beispielsweise eine Implantatversorgung einer Zahnsituation zu planen.

Ein Vorteil dieses Verfahrens besteht darin, dass die Gingivaschablone aus einem harten, nicht elastischen Material hergestellt wird, so dass die künstliche Gingiva beispielsweise durch Einspritzen von Silikon in die Gingivaschablone hergestellt werden kann. Dadurch entsprechen die Abmessungen der ausgehärteten hergestellten Gingiva dem geplanten 3D-Modell.

Die Gingivaschablone besteht aus mindestens zwei Teilen, die unter Verwendung von Verbindungsmitteln miteinander verbindbar sind .

Dadurch können die mindestens zwei Teile zu der Gingivaschablone zusammengesteckt werden. Die Verbindungsmittel können beispielsweise Steckverbindungen sein, die in der Art von Legobausteinen zusammengesteckt werden können.

Vorteilhafterweise kann die herzustellende künstliche Gingiva mindestens eine Implantataussparung für mindestens ein Implantatanalog aufweisen.

Die künstliche Gingiva kann auch zwei ,oder drei Implantataussparungen mit unterschiedlichen Ausrichtungen aufweisen. Vorteilhafterweise können bei der Konstruktion der Gingivaschablone unterschiedliche Flächen, nämlich unkritische Flächen, Auflageflächen und Hinterschnittflächen, konstruiert werden.

Die unkritischen Flächen sind Flächen, die mit einer hohen Fehlertoleranz hergestellt werden können, da sie beim Ein- setzen in das Dentalmodell keinen Kontakt zu einer inneren Struktur des Dentalmodells aufweisen. Auflageflächen sind Flächen mit einer geringen Fehlertoleranz, die beim Einsetzen der künstlichen Gingiva in das Dentalmodell auf der Innenstruktur des Dentalmodells aufliegen. Die Hinterschnittflächen der künstlichen Gingiva weisen Hinterschnitte relativ zu einer Einschubrichtung auf.

Vorteilhafterweise kann die Konstruktion der Gingivaschablone manuell durch einen Benutzer unter Verwendung eines Computers erfolgen, wobei mindestens eine unkritische Fläche, mindestens eine Hinterschnittfläche relativ zu einer Einschubrichtung der herzustellenden künstlichen Gingiva und/oder mindestens eine Auflagefläche festgelegt werden.

Dadurch werden die einzelnen Arten der Flächen durch den Benutzer computergestützt konstruiert. Dabei kann der Benutzer unterschiedliche virtuelle Werkzeuge zum Festlegen der einzelnen Flächen verwenden. Die Einschubrichtung der herzustellenden künstlichen Gingiva kann beispielsweise durch die Ausrichtung der zylindrischen Implantataussparung und/oder als Symmetrieachse der hügelförmigen Oberfläche der künstlichen Gingiva festgelegt werden.

Vorteilhafterweise kann die Konstruktion der Gingivaschablone vollautomatisch unter Verwendung eines Computers erfolgen, wobei mindestens eine unkritische Fläche, mindestens eine Hinterschnittfläche relativ zu einer Einschubrichtung der herzustellenden künstlichen Gingiva und/oder mindestens eine Auflagefläche festgelegt werden.

Dadurch werden die einzelnen Arten der Flächen vollautomatisch mittels des Computers festgelegt. Dabei kann die mindestens eine unkritische Fläche festgelegt werden, die einer unteren Fläche der künstlichen Gingiva entspricht, wobei die untere Fläche der künstlichen Gingiva einen Abstand zu der Innenstruktur des Dentalmodells aufweist und damit nicht aufliegt. Die unkritischen Flächen können in der Gingivaschablone als Einspritzkanäle verwendet werden. Im zweiten Schritt kann mindestens eine Auflagefläche festgelegt werden, die auf der Innenstruktur des Dentalmodells aufliegt. Im dritten Schritt kann die mindestens eine Hinterschnittfläche an mindestens einem Hinterschnitt relativ zu der Einschubrichtung festgelegt werden. An einem zweiten Hinterschnitt kann entsprechend eine zweite Hinterschnittfläche festgelegt werden.

Dadurch erfolgt die Konstruktion der Gingivaschablone vollautomatisch in Kenntnis des 3D-Modells der künstlichen Gingiva, so dass die Dauer der Konstruktion der Gingivaschablone verkürzt wird.

Vorteilhafterweise kann für jede Hinterschnittfläche mindestens ein zusätzliches, trennbares Teil der Gingivaschablone konstruiert werden.

Dadurch wird zu jeder Hinterschnittfläche mindestens ein weiteres Teil der Gingivaschablone konstruiert, so dass zum Herausnehmen der ausgehärteten künstlichen Gingiva die einzelnen Teile getrennt werden können.

Bei sehr geringen Hinterschnitten kann es sinnvoll sein, kein zusätzliches, trennbares Teil der Gingivaschablone zu konstruieren, da das Material der künstlichen Schablone elastisch genug ist, um trotz des geringen Hinterschnitts aus der Gingivaschablone entnommen zu werden.

Vorteilhafterweise kann für jede Implantataussparung der herzustellenden künstlichen Gingiva ein zusätzliches, trennbares Teil der Gingivaschablone konstruiert werden.

Dadurch kann das zusätzliche trennbare Teil als Negativ entsprechend eine zylindrische Form der Implantataussparung zum Einsetzen des Implantatanalogs aufweisen. Zum Herausnehmen der ausgehärteten künstlichen Gingiva können dann die einzelnen zusammengesteckten Teile der Gingivaschablone getrennt werden.

Vorteilhafterweise kann die mindestens eine unkritische Fläche der herzustellenden Gingivaschablone für einen Einspritzkanal zum Einspritzen eines Gingivamaterials verwendet werden.

Das Einspritzen des Materials, wie Silikon, kann beispiels- weise mittels einer Spritze erfolgen. Die mindestens eine unkritische Fläche als Einspritzkanal ermöglicht daher eine Bewegung der Spritze mit vielen Freiheitsgraden. Folglich kann der Benutzer mit der Spritze in jede Ecke der Gingivaschablone kommen, so dass mögliche Luftblasen beim Einspritzen vermieden werden.

Vorteilhafterweise kann das mindestens eine Teil der konstruierten Gingivaschablone mittels eines subtraktiven Herstellungsverfahrens, wie einer CAM-Herstellungsmaschine, oder mittels eines additiven Herstellungsverfahrens, wie eines 3D-Druckers, hergestellt werden.

Bei der Herstellung mittels einer CAM-Herstellungsmaschine wird ein Rohling in die CAM-Herstellungsmaschine eingespannt und mittels Fräswerkzeugen und/oder Schleifwerkzeugen so lange bearbeitet, bis das jeweilige Teil der konstruierten Gingivaschablone hergestellt ist. Bei der Verwendung eines 3D-Druckers wird das jeweilige Teil der Gingivaschablone ausgedruckt. Der 3D-Drucker kann beispielsweise auf einem SLS-Verfahren (Selektives Lasersintern) beruhen, wobei das Drucken von dreidimensionalen Objekten ohne Bindemittel oder zusätzliche Montageschritte ermöglicht wird. Dabei wird das vorliegende 3D-Modell des herzustellenden Objekts mittels einer speziellen Slicing- Software in viele horizontale Ebenen zerlegt und als Steuerbefehle an den 3D-Drucker weitergeleitet. Der 3D-Drucker druckt das Objekt dann Schicht für Schicht aus, wobei einzelne Puderpartikel in einem Puderbett durch eine hohe Temperatur eines Lasers miteinander verschmolzen werden. Anschließend wird das Objekt abgesenkt und eine neue Pulverschicht aufgetragen. Der Vorgang wird so lange wiederholt, bis das gesamte dreidimensionale Objekt vollständig ausgedruckt ist. Der 3D-Drucker kann auch auf einem Stereo- Lithographie-Verfahren beruhen, wobei ein Laser eingesetzt wird, der eine aus lichtempfindlichem Harz und Materialpartikeln zusammengesetzte Masse polymerisiert. Das Material der herzustellenden Gingivaschablone kann ein harter Kunststoff oder Keramik sein.

Vorteilhafterweise wird das Dentalmodell mit einer entsprechenden Innenstruktur zum Einsetzen der künstlichen Gingiva manuell durch einen Benutzer oder vollautomatisch mittels eines Computers konstruiert, wobei das konstruierte Dentalmodell mittels eines subtraktiven Herstellungsverfahrens, wie einer CAM-Herstellungsmaschine, oder mittels eines additiven Herstellungsverfahrens, wie eines 3D- Druckers, hergestellt wird. Dadurch wird das Dentalmodell vollautomatisch in Kenntnis der sichtbaren Oberfläche des Dentalmodells und der Innenstruktur des Dentalmodells als ein Negativ zur Innenstruktur der künstlichen Gingiva konstruiert. Anschließend wird das Dentalmodell nach einem konstruierten 3D-Modell des Dentalmodells vollautomatisch hergestellt. Dadurch wird die Dauer der Konstruktion und der Herstellung des Dentalmodells verkürzt.

Erfindungsgemäß wird in die hergestellte Gingivaschablone ein Gingivamaterial , wie Silikon, eingebracht und ausgehärtet.

Dadurch wird eine künstliche Gingiva hergestellt, die eine Elastizität und Farbe einer natürlichen Gingiva nachahmt und den Abmessungen des konstruierten 3D-Modells der künstlichen Gingiva genauer entspricht.

Vorteilhafterweise kann überschüssiges Material der ausgehärteten künstlichen Gingiva an mindestens einem Einspritzkanal manuell oder automatisch mittels einer Schneidvorrichtung von der hergestellten künstlichen Gingiva abgeschnitten werden.

Das überschüssige Material kann also manuell durch einen Benutzer abgeschnitten werden oder automatisch mittels einer Schneidvorrichtung von der ausgehärteten künstlichen Gingiva abgeschnitten werden. Die Schneidvorrichtung kann beispielsweise eine Klinge sein, die mittels eines Elektromotors angetrieben wird und entsprechend angesteuert wird, um das überschüssige Material am Einspritzkanal abzuschneiden. Durch die automatische Schneidvorrichtung wird eine fest definierte Schneidkante ermöglicht.

Im letzten Herstellungsschritt wird die künstliche Gingiva aus der Gingivaschablone entnommen. Falls die Gingivaschablone aus mehreren Teilen besteht, können die einzelnen Teile voneinander getrennt werden, um die ausgehärtete künstliche Gingiva leichter zu entnehmen.

Ein Vorteil der künstlichen Gingiva, hergestellt nach dem oben genannten Verfahren, besteht darin, dass die Abmessungen der ausgehärteten künstlichen Gingiva dem konstruierten 3D-Modell der Gingiva entsprechen. Ein weiterer Vorteil besteht darin, dass die künstliche Gingiva nach dem. oben genannten Verfahren vollautomatisch hergestellt werden kann, so dass die Dauer der Herstellung vermindert wird und mögliche Herstellungsfehler bei einer manuellen Herstellung verhindert werden.

Vorteilhafterweise kann die künstliche Gingiva mindestens eine unkritische Fläche, mindestens eine Auflagefläche und/oder mindestens eine Hinterschnittfläche aufweisen.

Die künstliche Gingiva weist also als Negativ zu der Gingivaschablone ebenfalls eine unkritische Fläche, mindestens eine Auflagefläche und/oder mindestens eine Hinterschnittfläche auf.

Vorteilhafterweise kann die künstliche Gingiva aus einem Gingivamaterial, wie Silikon, hergestellt werden.

Silikon ermöglicht die gewünschte Elastizität und Farbgebung, um die natürliche Gingiva möglichst genau nachzuahmen.

Ein Vorteil der Gingivaschablone besteht darin, dass die Gingivaschablone in Kenntnis des konstruierten 3D- Modells der künstlichen Gingiva als Negativform vollautomatisch konstruiert und anschließend hergestellt werden kann.

Dadurch wird also die Dauer der Herstellung der Gingivaschablone verkürzt und mögliche Konstruktionsfehler und Herstellungsfehler einer manuellen Herstellung der Gingivaschablone verhindert.

Vorteilhafterweise kann für mindestens eine Implantataussparung der herzustellenden künstlichen Gingiva ein zusätzliches, trennbares Teil der Gingivaschablone hergestellt werden .

Dadurch wird also für jede Implantataussparung ein trennbares Teil hergestellt, so dass nach dem Aushärten der künstlichen Gingiva das Auftrennen der Gingivaschablone erleichtert wird.

Vorteilhafterweise kann die mindestens eine unkritische Fläche der Gingivaschablone als ein Einspritzkanal zum Einspritzen eines Gingivamaterials verwendet werden.

Dadurch, dass die gesamte unkritische Fläche als Einspritzkanal dient, kann man die Spritze mit dem Gingivamaterial frei bewegen, um damit leichter in die Ecken der Gingiva-Schablonen zu kommen. Dadurch können mögliche Luftblasen beim Einspritzen verhindert werden.

Vorteilhafterweise kann die Gingivaschablone aus einem Schablonenmaterial, wie einem harten Kunststoff, hergestellt werden.

Dadurch werden unerwünschte Verformungen der Gingivaschablone verhindert, so dass die künstliche Gingiva nach dem Aushärten den Abmessungen des konstruierten 3D-Modells entspricht.

Vorteilhafterweise kann die Gingivaschablone einen Balken mit mindestens einer Auflagefläche aufweisen.

Der Balken kann als Teil der Innenstruktur der Gingivaschablone konstruiert werden, um eine ebene Auflagefläche zu gewährleisten. Im Dentalmodell zum Einsetzen der künstlichen Gingiva wird der Balken mit den gleichen Abmessungen konstruiert und hergestellt, so dass die künstliche Gingiva auf der Auflagefläche am Balken aufliegt. Die Auflagefläche am Balken verhindert damit, dass die elastische künstliche Gingiva sich beim Einsetzen ins Dentalmodell durchbiegt und damit vom konstruierten 3D- Modell abweicht.

Der Balken kann mit der Implantataussparung einteilig aus- geführt sein, so dass beim Einsetzen der künstlichen Gingiva in das Dentalmodell die Auflageflächen auf dem Balken aufliegen und dadurch elastische Verformung insbesondere in der Nähe der Implantataussparung verhindert werden.

Ein Vorteil dieses Dentalmodells besteht darin, dass das Dentalmodell vollautomatisch konstruiert und hergestellt werden kann. Dadurch wird die Dauer der Konstruktion und der Herstellung verkürzt und mögliche Herstellungsfehler einer manuellen Herstellung verhindert.

Die sichtbare Oberfläche des Dentalmodells wird durch ein konstruiertes 3D-Modell der Zahnsituation festgelegt. Die Innenstruktur zum Einsetzen der künstlichen Gingiva wird durch die Innenstruktur der künstlichen Gingiva als ein Negativ festgelegt, wobei bei den unkritischen Flächen ein Abstand zwischen den unkritischen Flächen der künstlichen Gingiva und der Innenstruktur des Dentalmodells vorgesehen wird.

### Kurzbeschreibung der Zeichnungen

Die Erfindung wird anhand der Zeichnungen erläutert. Es zeigt, die
- Fig. 1: eine Skizze zur Verdeutlichung des Verfahrens zur Herstellung einer künstlichen Gingiva, die
- Fig. 2, 3: Skizzen unterschiedlicher Querschnittsansichten des Dentalmodells; die
- Fig. 4-10: Skizzen unterschiedlicher Querschnittsansichten der Gingiva-Schablone .

### Ausführungsbeispiele

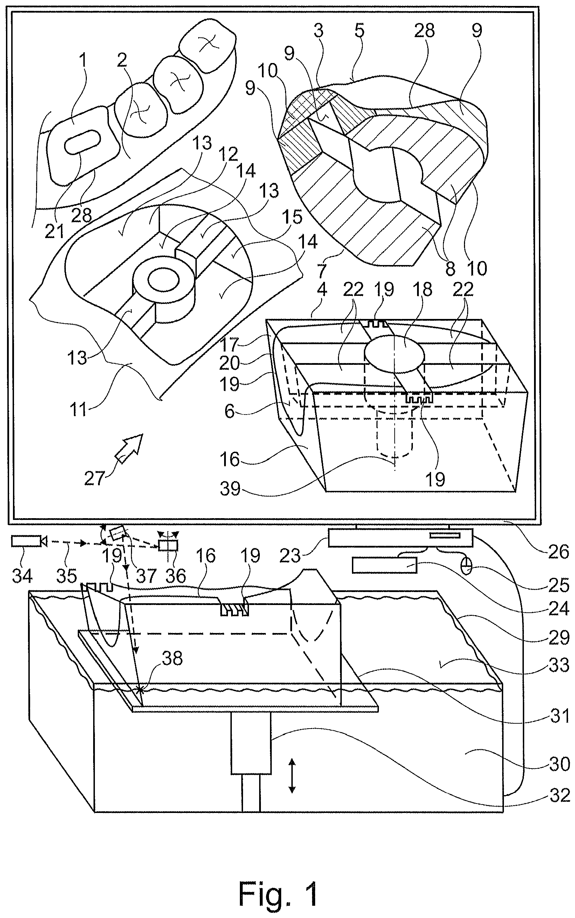

Die Fig. 1 zeigt eine Skizze zur Verdeutlichung des Verfahrens zur Herstellung einer künstlichen Gingiva 1 für ein Dentalmodell 2, wobei ein 3D-Modell 3 der künstlichen Gingiva 1 zumindest teilweise konstruiert ist. Anhand des 3D-Modells 3 der künstlichen Gingiva 1 wird eine Gingivaschablone 4 konstruiert, die beispielsweise sichtbare Oberflächen 5 des 3D-Modells 3 als Negativform in Form von Flächen 6 abbildet. Das 3D-Modell 3 der künstlichen Gingiva weist eine Innenstruktur 7 auf, bestehend aus mindestens einer unkritischen Fläche 8, mindestens einer Auflagefläche 9 und/oder einer Hinterschnittfläche 10. Der Rest des 3D-Modells 3 der künstlichen Gingiva 1 ist durch die sichtbare Oberfläche 5 definiert. Anschließend wird ein 3D-Modell 11 des Dentalmodells 2 konstruiert, wobei das Dentalmodell 2 eine Innenstruktur 12 aufweist, die zumindest teilweise als Negativform zu der Innenstruktur 7 des 3D-Modells 3 der künstlichen Gingiva 1 ausgebildet ist. Die Innenstruktur 12 des 3D-Modells 11 des Dentalmodells 2 weist dabei mindestens eine Auflagefläche 13, mindestens eine unkritische Fläche 14 und/oder mindestens eine Hinterschnittfläche 15 auf. Beim Einsetzen der künstlichen Gingiva 1 in das Dentalmodell 2 gelangen folglich die Auflageflächen 9 der künstlichen Gingiva 1 in Kontakt zu den Auflageflächen 13 der Innenstruktur 12 des Dentalmodells 2, wobei die unkritischen Flächen 8 der künstlichen Gingiva 1 beabstandet zu den unkritischen Flächen 14 des Dentalmodells 2 angeordnet werden. Die Hinterschnittfläche 10 der künstlichen Gingiva 1 gelangt folglich mit der Hinterschnittfläche 15 des Dentalmodells 2 in Kontakt, wobei die elastische künstliche Gingiva 1 so verformt wird, dass sie in die nicht elastische Innenstruktur 12 des Dentalmodells hineinpasst. In der dargestellten Ausführungsform ist die Gingivaschablone 4 aus einem ersten Teil 16, einem zweiten Teil 17 und einem dritten Teil 18 konstruiert. Die einzelnen Teile 16, 17 und 18 sind miteinander unter Verwendung von Verbindungsmitteln 19, wie Steckverbindungen, verbindbar. Das zweite Teil 17 ist trennbar vom ersten Teil 16 konstruiert, um trotz einer Hinterschnittfläche 20 die ausgehärtete künstliche Gingiva 1 aus der Gingivaschablone 4 entnehmen zu können. Das dritte Teil 18 ist vorgesehen, um eine Implantataussparung 21 für ein Implantat analog herzustellen. Die schraffiert dargestellten nichtkritischen Flächen 22 werden als Einspritzkanäle zum Einspritzen von Silikon verwendet. Dadurch kann der Benutzer mit der Silikonspritze einfacher in die Ecken der Gingivaschablone 4 gelangen, so dass die Entstehung von Luftblasen verhindert wird. Die Konstruktion des 3D-Modells 3 der künstlichen Gingiva 1, des 3D-Modells 11 des Dentalmodells 2 sowie die Konstruktion der Gingivaschablone 4 erfolgt virtuell durch einen Benutzer oder vollautomatisch unter Verwendung eines Computers 23, an den Eingabemittel, wie eine Tastatur 24 und eine Maus 25, angeschlossen sind. An den Computer 23 ist auch eine Anzeigevorrichtung 26, wie ein Monitor zur graphischen Darstellung und Bearbeitung der 3D-Modelle, angeschlossen. Der Benutzer kann über die Eingabemittel 24 und 25 über einen Cursor 27 das 3D-Modell 3 der künstlichen Gingiva 1, das 3D-Modell 11 des Dentalmodells 2 und das 3D- Modell der Gingivaschablone bearbeiten, um diese zu konstruieren. Die Konstruktion kann auch vollautomatisch erfolgen, wobei vorgegebene Kriterien über den Aufbau der Innenstruktur 7 der künstlichen Gingiva 1 und der Innenstruktur 12 des Dentalmodells 2 berücksichtigt werden. Bei der automatischen Konstruktion können als Eingabedaten beispielsweise eine Randlinie 28 der künstlichen Gingiva 1 und folglich des 3D-Modells 3 sowie die Form der sichtbaren Oberfläche 5 verwendet werden. Anschließend werden die Hinterschnittflächen 10 der Innenstruktur 7 und der Innenstruktur 12 festgelegt. Die Hinterschnittflächen dienen dabei als Verankerung für die elastisch verformbare künstliche Gingiva 1, damit diese nicht aus dem Dentalmodell 2 herausfällt. Im zweiten Schritt werden die Auflageflächen 9 der künstlichen Gingiva 1 und damit die Auflageflächen 13 der Innenstruktur 12 des Dentalmodells 2 festgelegt. Im dritten Schritt werden die unkritischen Flächen 8 festgelegt. Die einzelnen Teile 16, 17 und 18 können mittels eines 3D-Druckers 29 hergestellt werden, wobei der 3D-Drucker vom Computer 23 entsprechend angesteuert wird. In Fig. 1 ist dargestellt, dass das erste Teil 16 der Gingivaschablone 4 mittels des 3D-Druckers 29 ausgedruckt wird. Die automatische Herstellung kann auch mittels einer CAM- Herstellungsmaschine erfolgen. In der dargestellten Ausführungsform beruht der 3D-Drucker auf einem SLS-Verfahren . Der 3D-Drucker ist mit dem verwendeten Material 30 befüllt. Das Material 30 kann eine Paste, eine Masse, ein Pulver o- der eine Flüssigkeit bestehend aus Partikeln des verwendeten Materials sein. Das erste Teil 16 wird mittels des 3D- Druckers ausgedruckt, in dem eine Plattform 31 mittels eines Verstellmittels 32 Ebene für Ebene herabgesenkt wird. Für jede Ebene wird die Oberfläche 33 des verwendeten Materials 30 Punkt für Punkt abgescannt. Ein Laser 34 strahlt einen Laserstrahl 35 ab, wobei der Laserstrahl 35 mittels eines ersten verstellbaren Umlenkspiegels 36 und eines zweiten verstellbaren Umlenkspiegels 37 umgelenkt wird und auf einen Fokuspunkt 38 fokussiert wird. Am Fokuspunkt 38 führt die hohe Temperatur des auftreffenden Laserstrahls 35 zu einer Verschmelzung der Partikel des Materials 30. Die Umlenkspiegel 36 und 37 werden mittels einer Steuereinheit des 3D-Druckers 29 so angesteuert, dass die gewünschten Schichten des Objekts abgescannt werden. Nach dem Ausdrucken einer Ebene wird die Plattform 31 herabgesenkt und die nächste Ebene ausgedruckt. Auf diese Weise wird das gesamte Teil 16 Ebene für Ebene ausgedruckt. Anschließend wird auch das zweite Teil 17 und das dritte Teil 18 der Gingivaschablone 4 ausgedruckt.

Die einzelnen Teile 16, 17 und 18 werden dann zusammengesetzt, wobei in die Gingivaschablone 4 das Gingivamaterial , wie Silikon, eingespritzt und ausgehärtet wird. Anschließend wird an den unkritischen Flächen 22 das überschüssige Material der ausgehärteten künstlichen Gingiva 1 abgeschnitten. Danach wird die ausgehärtete künstliche Gingiva 1 aus der Gingivaschablone 4 entnommen. Das Dentalmodell 2 kann ebenfalls nach dem 3D-Modell 11 mittels des 3D- Druckers 29 ausgedruckt werden. Anschließend wird die her- gestellte künstliche Gingiva 1 in das ausgedruckte Dentalmodell 2 eingesetzt.

Die Hinterschnittfläche 20 wird relativ zu einer Einschubrichtung 39 des 3D-Modells 3 der herzustellenden künstlichen Gingiva 1 bzw. der Gingivaschablone 4 festgelegt. Die Einschubrichtung 39 kann beispielsweise mit der Symmetrieachse der zylinderförmigen Implantataussparung 21 übereinstimmen .

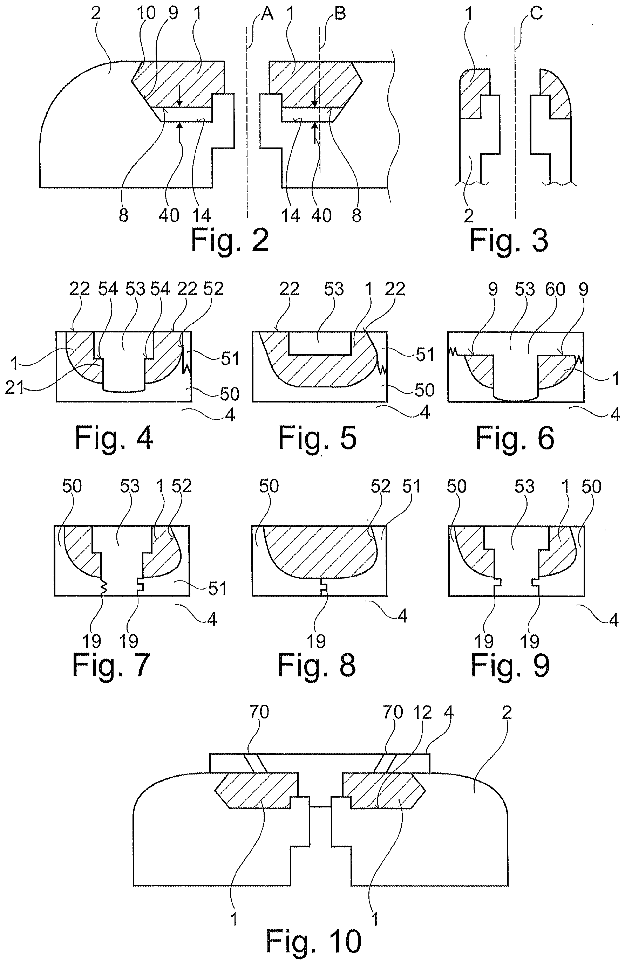

Die Fig. 2 zeigt eine Skizze einer Querschnittsansicht des Dentalmodells 2 und einer darin eingesetzten künstlichen Gingiva 1, wobei zwischen den unkritischen Flächen 8 der künstlichen Gingiva 1 und den unkritischen Flächen 14 ein Abstand 40 besteht. Die Auflagefläche 9 und die Hinterschnittfläche 10 der künstlichen Gingiva 1 sind ebenfalls dargestellt. In Fig. 2 ist eine erste Schnittebene A und eine zweite Schnittebene B dargestellt.

Die Fig. 3 zeigt eine Querschnittsansicht des Dentalmodells 2 und der künstlichen Gingiva 1 in der Schnittebene A aus Fig. 2, wobei in Fig. 3 eine dritte Schnittebene C in Längsrichtung des Dentalmodells 2 dargestellt ist.

Die Fig. 4 zeigt eine erste Variation einer Gingivaschablone 4 bestehend aus einem ersten Teil 50, einem zweiten Teil 51 für die Hinterschnittfläche 52 zur Herstellung der Hinterschnittfläche 10 der künstlichen Gingiva 1 und einem dritten Teil 53 zur Herstellung der Implantataussparung 21 in der Querschnittsansicht durch die Schnittebene A aus Fig. 2. Auflageflächen 54 der Gingivaschablone 4 sind in Fig. 4 ebenfalls dargestellt.

Die Fig. 5 zeigt die Gingivaschablone 4 bestehend aus den Teilen 50, 51 und 53 in der Querschnittsansicht durch die Schnittebene B aus Fig. 2.

Die Fig. 6 zeigt die Gingivaschablone 4 in der Quer- Schnittansicht durch die Schnittebene C aus Fig. 3, wobei das dritte Teil 53 einen Balken 60 zur Erzeugung von Auflageflächen 9 der künstlichen Gingiva 1 aufweist.

Das Silikon wird durch die unkritischen Flächen 22, wie in Fig. 4 und Fig. 5 zu sehen, in die Gingivaschablone 4 ein- gespritzt.

Die Fig. 7 zeigt eine zweite Variante der Gingivaschablone bestehend aus einem ersten Teil 50, einem zweiten Teil 51 und einem dritten Teil 53, wobei im Unterschied zu Fig. 4 die Verbindungsmittel 19 zwischen dem ersten Teil 50 und dem dritten Teil 53 sowie zwischen dem zweiten Teil 51 und dem dritten Teil 53 angeordnet sind. Fig. 7 ist eine Querschnittsansicht in der Schnittebene A aus Fig. 2.

Die Fig. 8 stellt eine Querschnittsansicht der Gingivaschablone in der Schnittebene B aus Fig. 2.

Die Fig. 9 zeigt eine Querschnittsansicht der Gingivaschablone 4 in der Schnittebene B aus Fig. 3.

Die Fig. 10 zeigt eine Skizze einer weiteren Ausführungsform, bei der die Gingivaschablone 4 aus nur einem Teil besteht und direkt auf das hergestellte Dentalmodell 2 aufgesetzt wird, wobei die einteilige Gingivaschablone 4 zwei Einspritzkanäle 70 zum Einspritzen des

Silikons aufweist. Die künstliche Gingiva 1 wird also unmittelbar durch das Einspritzen des Silikons durch die Einspritzkanäle 70 in die Zwischenräume zwischen der Gingivaschablone 4 und der Innenstruktur 12 des Dentalmodells 2 hergestellt.

### Bezugszeichen

1 Gingiva
2 Dentalmodell
3 3D-Modell
4 Gingiva-Schablone
5 Oberflächen
6 Flächen
7 Innenstruktur
8 unkritische Fläche
9 Auflagefläche
10 Hinterschnittfläche
11 3D-Modell
12 Innenstruktur
13 Auflagefläche
14 unkritische Fläche
15 Hinterschnittfläche
16 erstes Teil
17 zweites Teil
18 drittes Teil
19 Verbindungsmittel
20 Hinterschnittfläche
21 Implantataussparung
22 nichtkritische Fläche
23 Computer
24 Tastatur
25 Maus
26 Anzeigevorrichtung
27 Cursor
28 Randlinie
29 3D-Drucker
30 Material
31 Plattform
32 Verstellmittel
33 Oberfläche
34 Laser
35 Laserstrahl
36 Umlenkspiegel
37 Umlenkspiegel
38 Fokuspunkt
39 Einschubrichtung
40 Abstand
50 erstes Teil
52 zweites Teil
53 drittes Teil
54 Auflageflächen der Gingiva-Schablone 60 Balken
70 Einspritzkanäle

## Patentansprüche

1. Verfahren zur Herstellung einer künstlichen Gingiva (1), wobei ein 3D-Modell (3) der künstlichen Gingiva (1) bereits vorhanden ist, wobei ein Dentalmodell (2) mit einer entsprechenden Innenstruktur (12) zum Einsetzen der künstlichen Gingiva (1) manuell durch einen Benutzer oder vollautomatisch mittels eines Computers (23) konstruiert wird, wobei das konstruierte Dentalmodell (2) mittels eines subtraktiven Herstellungsverfahrens, wie einer CAM-Herstellungsmaschine, oder mittels eines additiven Herstellungsverfahrens, wie eines 3D-Druckers (29) , hergestellt wird, **dadurch gekennzeichnet, dass** anhand des 3D-Modells (3) der künstlichen Gingiva (1) eine Gingivaschablone (4) konstruiert wird, die zumindest Teilbereiche (5) des 3D-Modells (3) der künstlichen Gingiva (1) als Negativform abbildet, wobei die Gingivaschablone (4) aus mindestens zwei Teilen (16, 17, 18) konstruiert wird, wobei die Teile (16, 17, 18) der Gingivaschablone (4) unter Verwendung von Verbindungsmitteln (19) miteinander verbindbar konstruiert werden, wobei in die hergestellte Gingivaschablone (4) ein Gingivamaterial, wie Silikon, eingebracht und ausgehärtet wird.

2. Verfahren nach Anspruch 1, **dadurch gekennzeichnet, dass** die herzustellende künstliche Gingiva (1) mindestens eine Implantataussparung (21) für mindestens ein Implantatanalog aufweist.

3. Verfahren nach Anspruch 1 oder 2, **dadurch gekennzeichnet, dass** bei der Konstruktion der Gingivaschablone (4) hinsichtlich des Einsetzens der künstlichen Gingiva in das Dentalmodell unterschiedliche Flächen (20, 22), nämlich unkritische Flächen (22), Auflageflächen (54) und Hinterschnittflächen (20), konstruiert werden so dass die künstliche Gingiva (1) mindestens eine unkritische Fläche (8), mindestens eine Auflagefläche (9) und/oder mindestens eine Hinterschnittfläche (10) aufweist.

4. Verfahren nach Anspruch 3, **dadurch gekennzeichnet, dass** die Konstruktion der Gingivaschablone (4) manuell durch einen Benutzer unter Verwendung eines Computers (23) erfolgt, wobei mindestens eine unkritische Fläche (22), mindestens eine Hinterschnittfläche (20) relativ zu einer Einschubrichtung (39) der herzustellenden künstlichen Gingiva (1) und/oder mindestens eine Auflagefläche festgelegt wird.

5. Verfahren nach Anspruch 3, **dadurch gekennzeichnet, dass** die Konstruktion der Gingivaschablone (4) vollautomatisch unter Verwendung eines Computers (23) erfolgt, wobei mindestens eine unkritische Fläche (23) , mindestens eine Hinterschnittfläche (20) relativ zu einer Einschubrichtung (39) der herzustellenden künstlichen Gingiva (1) und/oder mindestens eine Auflagefläche festgelegt wird.

6. Verfahren nach einem der Ansprüche 3-5, **dadurch gekennzeichnet, dass** für jede Hinterschnittfläche (20) mindestens ein zusätzliches, trennbares Teil (17) der Gingivaschablone (4) konstruiert wird.

7. Verfahren nach einem der Ansprüche 2-6, **dadurch gekennzeichnet, dass** für jede Implantataussparung (21) der herzustellenden künstlichen Gingiva (1) ein zusätzliches, trennbares Teil (18) der Gingivaschablone (4) konstruiert wird.

8. Verfahren nach einem der Ansprüche 3-7, **dadurch gekennzeichnet, dass** die mindestens eine unkritische Fläche (22) der herzustellenden Gingivaschablone (4) als ein Einspritzkanal zum Einspritzen eines Gingivamaterials verwendet wird.

9. Verfahren nach einem der Ansprüche 1-8, **dadurch gekennzeichnet, dass** das mindestens ein Teil (16, 17, 25 18) der konstruierten Gingivaschablone (4) mittels eines subtraktiven Herstellungsverfahrens, wie einer CAM-Herstellungsmaschine, oder mittels eines additiven Herstellungsverfahrens, wie eines 3D-Druckers (29), hergestellt wird.

10. Verfahren nach einem der Ansprüche 1-9, **dadurch gekennzeichnet, dass** ein überschüssiges Material der ausgehärteten künstlichen Gingiva (1) an mindestens einem Einspritzkanal manuell oder automatisch mittels einer Schneidvorrichtung von der hergestellten künstlichen Gingiva (1) abgeschnitten wird.

11. Verfahren nach Anspruch 10, **dadurch gekennzeichnet, dass** die ausgehärtete künstliche Gingiva (1) aus der Gingivaschablone (4) entnommen wird.

12. Verfahren nach Anspruch 9, **dadurch gekennzeichnet, dass** die Teile (16, 17, 18) der Gingivaschablone (4) unter Verwendung von Verbindungsmitteln (19) in Form von Steckverbindungen miteinander mechanisch verbindbar sind.

13. Verfahren nach einem der Ansprüche 1-12, **dadurch gekennzeichnet, dass** die Gingivaschablone (4) aus einem Schablonenmaterial, wie einem harten Kunststoff, hergestellt wird.

14. Verfahren nach einem der Ansprüche 1-13, **dadurch gekennzeichnet, dass** die Gingivaschablone (4) einen Balken (60) mit mindestens einer Auflagefläche (9) aufweist.

## Claims

1. A method for producing an artificial gingiva (1), wherein a 3D model (3) of the artificial gingiva (1) is already available, wherein a dental model (2) with a corresponding internal structure (12) for inserting the artificial gingiva (1) is designed manually by a user or fully automatically by means of a computer (23), wherein the designed dental model (2) is produced by means of a subtractive production process, such as a CAM production machine, or by means of an additive production process, such as a 3D printer (29), **characterised in that** a gingival template (4) is designed on the basis of the 3D model (3) of the artificial gingiva (1), which gingival template reproduces at least sub-regions (5) of the 3D model (3) of the artificial gingiva (1) as a negative mould, wherein the gingival template (4) is designed from at least two parts (16, 17, 18), wherein the parts (16, 17, 18) of the gingival template (4) are designed to be connectable to one another using connecting means (19), wherein a gingival material such as silicone is introduced into the produced gingival template (4) and cured.

2. The method according to claim 1, **characterised in that** the artificial gingiva (1) to be produced has at least one implant recess (21) for at least one implant analogue.

3. The method according to claim 1 or 2, **characterised in that** different surfaces (20, 22), namely non-critical surfaces (22), bearing surfaces (54) and undercut surfaces (20), are designed during the design of the gingival template (4) with respect to the insertion of the artificial gingiva in the dental model, such that the artificial gingiva (1) has at least one non-critical surface (8), at least one bearing surface (9) and/or at least one undercut surface (10).

4. The method according to claim 3, **characterised in that** the gingival template (4) is designed manually by a user using a computer (23), wherein at least one non-critical surface (22), at least one undercut surface (20) relative to an insertion direction (39) of the artificial gingiva (1) to be produced and/or at least one bearing surface are defined.

5. The method according to claim 3, **characterised in that** the gingival template (4) is designed fully automatically using a computer (23), wherein at least one non-critical surface (23), at least one undercut surface (20) relative to an insertion direction (39) of the artificial gingiva (1) to be produced and/or at least one bearing surface are defined.

6. The method according to any one of claims 3-5, **characterised in that** at least one additional, separable part (17) of the gingival template (4) is designed for each undercut surface (20).

7. The method according to any one of claims 2-6, **characterised in that** an additional, separable part (18) of the gingival template (4) is designed for each implant recess (21) of the artificial gingiva (1) to be produced.

8. The method according to any one of claims 3-7, **characterised in that** the at least one non-critical surface (22) of the gingival template (4) to be produced is used as an injection channel for injecting a gingival material.

9. The method according to any one of claims 1-8, **characterised in that** the at least one part (16, 17, 25 18) of the designed gingival template (4) is produced by means of a subtractive production process, such as a CAM production machine, or by means of an additive production process, such as a 3D printer (29).

10. The method according to any one of claims 1-9, **characterised in that** an excess material of the cured artificial gingiva (1) is cut off manually or automatically by means of a cutting device from the artificial gingiva (1) produced on at least one injection channel.

11. The method according to claim 10, **characterised in that** the cured artificial gingiva (1) is removed from the gingival template (4).

12. The method according to claim 9, **characterised in that** the parts (16, 17, 18) of the gingival template (4) can be mechanically connected to one another using connecting means (19) in the form of plug-in connections.

13. The method according to any one of claims 1-12, **characterised in that** the gingival template (4) is produced from a template material such as a hard plastic.

14. The method according to any one of claims 1-13, **characterised in that** the gingival template (4) has a bar (60) with at least one bearing surface (9).

## Revendications

1. Procédé de production d'une gencive artificielle (1), un modèle 3D (3) de la gencive artificielle (1) étant déjà disponible, un modèle dentaire (2) ayant une structure interne correspondante (12) étant construit pour insérer la gencive artificielle (1) manuellement par un utilisateur ou de manière entièrement automatique au moyen d'un ordinateur (23), le modèle dentaire construit (2) étant fabriqué selon un processus de fabrication soustractive, tel qu'une machine de fabrication CAM, ou selon un processus de fabrication additive, telle qu'une imprimante 3D (29), **caractérisé en ce qu'**un gabarit gingival (4) est construit sur la base du modèle 3D (3) de la gencive artificielle (1) qui représente au moins des zones partielles (5) du modèle 3D (3) de la gencive artificielle (1) sous forme négative, le gabarit gingival (4) étant constitué d'au moins deux parties (16, 17, 18), les parties (16, 17, 18) de gabarit gingival (4) étant construites de manière à pouvoir être liées les unes aux autres à l'aide de moyens de liaison (19), un matériau gingival, tel que la silicone, étant introduit dans le gabarit gingival (4) et durci.

2. Procédé selon la revendication 1, **caractérisé en ce que** la gencive artificielle (1) à fabriquer présente au moins un évidement pour implant (21) pour au moins un analogue d'implant.

3. Procédé selon la revendication 1 ou 2, **caractérisé en ce que**, lors la construction du gabarit gingival (4), en vue de l'insertion de la gencive artificielle dans le modèle dentaire, différentes surfaces (20, 22), à savoir des surfaces non critiques (22), des surfaces d'appui (54) et des surfaces en contre-dépouille (20), sont construites pour que la gencive artificielle (1) présente au moins une surface non critique (8), au moins une surface d'appui (9) et/ou au moins une surface en contre-dépouille (10).

4. Procédé selon la revendication 3, **caractérisé en ce que** le gabarit gingival (4) est construit manuellement par un utilisateur à l'aide d'un ordinateur (23), au moins une surface non critique (22) et au moins une surface en contre-dépouille (20) étant définies par rapport à une direction d'insertion (39) de la gencive artificielle (1) à fabriquer et/ou au moins à une surface d'appui.

5. Procédé selon la revendication 3, **caractérisé en ce que** le gabarit gingival (4) est construit de manière entièrement automatique à l'aide d'un ordinateur (23), au moins une surface non critique (23) et au moins une surface en contre-dépouille (20) étant définies par rapport à une direction d'insertion (39) de la gencive artificielle (1) à réaliser et/ou au moins une surface d'appui.

6. Procédé selon l'une des revendications 3 à 5, **caractérisé en ce qu'**au moins une partie séparable supplémentaire (17) du gabarit gingival (4) est construite pour chaque surface en contre-dépouille (20).

7. Procédé selon l'une des revendications 2 à 6, **caractérisé en ce qu'**une partie séparable supplémentaire (18) du gabarit gingival (4) est construite pour chaque évidement pour implant (21) de la gencive artificielle (1) à fabriquer.

8. Procédé selon l'une des revendications 3 à 7, **caractérisé en ce que** l'au moins une surface non critique (22) du gabarit gingival (4) à fabriquer est utilisée comme canal d'injection pour injecter un matériau gingival.

9. Procédé selon l'une des revendications 1 à 8, **caractérisé en ce que** l'au moins une partie (16, 17, 25 18) du gabarit gingival (4) est fabriquée selon un procédé de fabrication soustractive, tel qu'une machine de fabrication CAM, ou selon un procédé de fabrication additive, tel qu'une imprimante 3D (29).

10. Procédé selon l'une des revendications 1 à 9, **caractérisé en ce qu'**un excédent de matière de la gencive artificielle durcie (1) sur au moins un canal d'injection est enlevé manuellement ou automatiquement au moyen d'un dispositif de coupe, par découpage à partir de la gencive artificielle (1) fabriquée.

11. Procédé selon la revendication 10, **caractérisé en ce que** la gencive artificielle durcie (1) est retirée du gabarit gingival (4).

12. Procédé selon la revendication 9, **caractérisé en ce que** les parties (16, 17, 18) du gabarit gingival (4) peuvent être reliées mécaniquement les unes aux autres à l'aide de moyens de liaison (19) sous forme de connecteurs enfichables.

13. Procédé selon l'une des revendications 1 à 12, **caractérisé en ce que** le gabarit gingival (4) est fabriqué à partir d'un matériau de gabarit tel qu'un plastique dur.

14. Procédé selon l'une des revendications 1 à 13, **caractérisé en ce que** le gabarit gingival (4) présente une barre (60) ayant au moins une surface d'appui (9).
